# EUROPÄISCHE PATENTANMELDUNG

(11) **EP 0 764 768 A1**
(43) Veröffentlichungstag der Anmeldung: **26.03.1997**
(21) Anmeldenummer: 96810566.8
(22) Anmeldetag: 28.08.1996
(51) Int. Cl.: F01K 23/10, F01K 21/04

(54) **Verfahren zum Betrieb einer Kraftwerksanlage**

(30) Priorität: 22.09.1995 DE 19535228
(71) Anmelder: ASEA BROWN BOVERI AG, 5401 Baden (CH)
(72) Erfinder: Fetescu, Mircea, 5408 Ennetbaden (CH); Nielsen, Henrik, 5430 Wettingen (CH)
(74) Vertreter: Klein, Ernest

(57) **Zusammenfassung**

Bei einem Verfahren und einer Vorrichtung zum Betrieb einer Kraftwerksanlage, im wesentlichen bestehend aus einer Gasturbogruppe (40, 41, 46), einem Abhitzedampferzeuger (8) und einem nachgeschalteten Dampfverbraucher, beispielsweise einer Dampfturbine (1) mit Generator (2), gibt das Abgas der Gasturbogruppe (40, 41, 46) Wärme an das über eine Speisewasserleitung (15) zugeführte und im Gegenstrom durch den Abhitzedampferzeuger (8) geleitete Wasser ab. Der erzeugte Dampf wird über mindestens eine Dampfleitung (6) dem Dampfverbraucher (1) zugeführt.

Das durch die Speisewasserleitung (15) zugeführte Wasser wird in einem Durchgang durch den Abhitzedampferzeuger (8) geleitet. Die Abgase der Gasturbogruppe (40, 41, 46) werden zu jedem Betriebszeitpunkt durch den Abhitzedampferzeuger (8) geleitet. Wenn der Dampfverbraucher (1) abgeschaltet wird, wird der im Abhitzedampferzeuger (8) erzeugte Dampf über eine Einspritzdampfleitung (23) in die Gasturbogruppe (40, 41; 46) eingeleitet.

## Beschreibung

### Technisches Gebiet

Die Erfindung betrifft ein Verfahren und eine Vorrichtung zum Betrieb einer Kraftwerksanlage, im wesentlichen bestehend aus einer Gasturbogruppe, einem Abhitzedampferzeuger und einem nachgeschalteten Dampfverbraucher, beispielsweise einer Dampfturbine mit Generator, wobei das Abgas der Gasturbogruppe Wärme an das über eine Speisewasserleitung zugeführte und im Gegenstrom durch den Abhitzedampferzeuger geleitete Wasser abgibt und wobei der erzeugte Dampf über mindestens eine Dampfleitung dem Dampfverbraucher zugeführt wird.

### Stand der Technik

Derartige Verfahren und Vorrichtungen zum Betrieb einer Kraftwerksanlage sind bekannt. Im Abhitzedampferzeuger wird den Abgasen der Gasturbogruppe Wärmeenergie entzogen und mit dieser Wärmeenergie Wasser verdampft, und dieser Dampf einem Dampfverbraucher zugeführt wird. Beim Dampfverbraucher kann es sich beispielsweise um eine Dampfturbine mit einem Generator zur Erzeugung von Elektrizität, oder um eine Industrieanlage handeln. Wird der Dampfverbraucher abgestellt, beispielsweise zur Wartung, wird kein Dampf mehr benötigt. Deshalb ist abzweigend von der zwischen Gasturbine und Abhitzedampferzeuger angeordneten Abgasleitung üblicherweise eine Umgehungsleitung zu einem Kamin angebracht. Ueber ein Verteilventil, beispielsweise eine Klappe, kann der Abgasstrom durch den Abhitzedampferzeuger oder direkt durch den Kamin geleitet werden. Dadurch ist es möglich die Gasturbogruppe offen zu betreiben, d.h. ohne Dampf zu produzieren, der nicht verbraucht werden kann. Die Abgase werden dann jedoch ohne Wärmerückgewinnung direkt an die Umwelt abgegeben. Dies bedeutet einen erheblichen Verlust an Wärmeenergie und erhebliche Investitionskosten für den Kamin und das Verteilventil. Das Verteilventil für den Abgasstrom kann zudem nie ganz dicht gemacht werden, es können Verluste des Abgasstromes von einigen Prozenten auftreten und damit Verluste bei der Leistung der Dampfturbine. Die Unterhaltskosten für das Verteilventil sind zudem sehr hoch, da es sich um ein thermisch hochbeanspruchtes Bauteil handelt.

### Darstellung der Erfindung

Der Erfindung liegt die Aufgabe zugrunde, bei einem Verfahren und einer Vorrichtung zum Betrieb einer Kraftwerksanlage der eingangs genannten Art die Verfügbarkeit und die Effizienz der Kraftwerksanlage zu erhöhen.

Erfindungsgemäss wird dies dadurch erreicht, dass das durch die Speisewasserleitung zugeführte Wasser in einem Durchgang durch den Abhitzedampferzeuger geleitet wird, dass die Abgase der Gasturbogruppe zu jedem Betriebszeitpunkt durch den Abhitzedampferzeuger geleitet werden und dass wenn der Dampfverbraucher abgeschaltet wird, der im Abhitzedampferzeuger erzeugte Dampf über eine Einspritzdampfleitung in die Gasturbogruppe eingeleitet wird.

Die Vorteile der Erfindung sind unter anderem darin zu sehen, dass ein Verteilventil in der Abgasleitung nicht mehr benötigt wird, da zu jedem Betriebszeitpunkt der Gasturbogruppe auch Dampf zur Energiegewinnung verwendet werden kann. Die Anlagekosten werden dadurch gesenkt und die Nachteile eines Verteilventiles vermieden. Wenn der Dampfverbraucher abgeschaltet wird, wird die Energie der Abgase teilweise zurückgewonnen, indem Dampf in die Gasturbogruppe eingeleitet wird. Der Dort eingeleitete Dampf wird durch demineralisiertes Wasser ersetzt. Die Effizienz der Gasturbogruppe wird somit gesteigert. Indem das Wasser in einem Durchgang durch den Abhitzedampferzeuger geleitet wird, kann die Dampfmenge und die Dampftemperatur durch die Wassermenge in der Speisewasserleitung eingestellt werden.

Es ist deshalb besonders zweckmässig, wenn in der Einspritzdampfleitung eine Messblende und in der Speisewasserleitung ein Regelventil angeordnet ist. Durch das Regelventil kann die Wassermenge und damit die Dampfmenge eingestellt werden, die in die Gasturbogruppe eingeleitet wird.

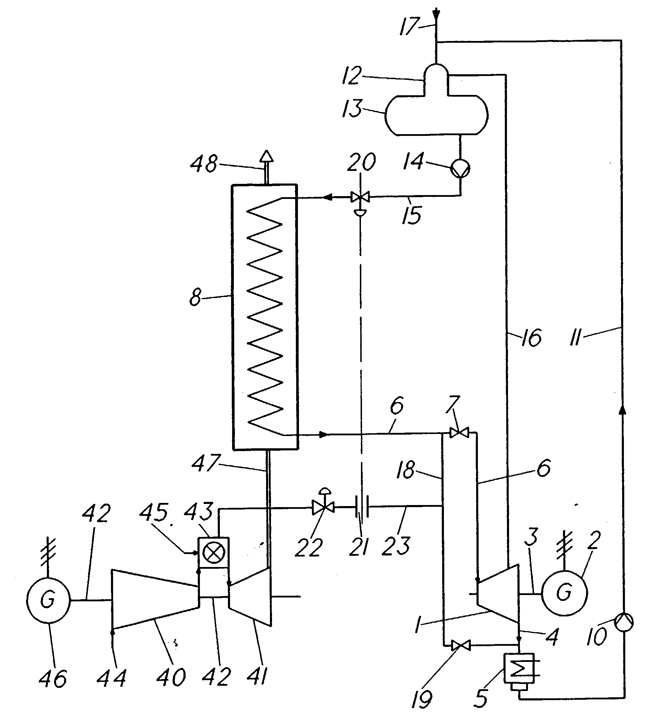

### Kurze Beschreibung der Zeichnung

In der einzigen Zeichnung ist ein Ausführungsbeispiel der Erfindung anhand einer schematischen Darstellung einer kombinierten Gas- und Dampfturbinenanlage dargestellt.

Es sind nur die für das Verständnis der Erfindung wesentlichen Elemente gezeigt. Nicht dargestellt sind von der Anlage beispielsweise die exakte Ausgestaltung des Abhitzedampferzeugers sowie die Regelung des Wasser-/Dampf-Kreislaufes. Die Strömungsrichtung der Arbeitsmittel ist durch Pfeile angegeben.

### Weg zur Ausführung der Erfindung

Die dargestellte Gasturbogruppe besteht im wesentlichen aus einem Verdichter 40, einer Turbine 41 und einem Generator 46, die über eine Welle 42 verbunden sind, sowie einer Brennkammer 43. Im Verdichter 40 wird Luft über eine Luftzuführung 44 angesaugt, komprimiert und die verdichtete Luft in die Brennkammer 43 geleitet. Dort wird der Verbrennungsluft Brennstoff 45 zugeführt und das Brennstoff-Luft-Gemisch verbrannt. Die entstandenen Rauchgase werden in die Turbine 41 eingeleitet, wo sie entspannt werden und ein Teil der Energie der Rauchgase in Drehenergie umgewandelt wird. Diese Drehenergie wird über die Welle 42 zum Antrieb des Generators 46 verwendet.

Die noch heissen Abgase werden über eine Abgasleitung 47 direkt einem Abhitzedampferzeuger 8 zugeführt. Die heissen Abgase werden dabei zu jedem Betriebszeitpunkt der Turbine 41 dem Abhitzedampferzeuger 8 zugeführt, d.h. es ist keine Umgehungsleitung für die Abgase vorhanden. Im Abhitzedampferzeuger 8 wird dem Abgas Wärmeenergie entzogen und damit Wasser verdampft. Nach Abgabe der Wärmeenergie wird das Abgas über einen Kamin 48 ins Freie geleitet. Das Wasser wird im Gegenstrom in einem Durchlauf (engl. once-through) durch denn Abhitzedampferzeuger 8 geleitet. Der im Abhitzedampferzeuger 8 erzeugte, überhitzte Dampf wird über eine Dampfleitung 6 einer Dampfturbine 1 zugeführt. Der Dampf wird in der Dampfturbine 1 arbeitsleistend entspannt und die gewonnen Energie über eine Welle 3 an einem Generator 2 abgegeben. Der über eine Abdampfleitung 4 austretende Abdampf wird in einem Kondensator 5 kondensiert und im zugehörigen Hotwell zwischengespeichert. Das kondensierte Wasser wird über eine Pumpe 10 und eine Kondensatleitung 11 abgeführt und in einen Entgaserdom 12 geleitet. Ueber eine Wasserleitung 17 kann zusätzlich demineralisiertes Wasser in den Entgaserdom eingeleitet werden. Der Entgaserdom 12 ist auf einem Speisewasserbehälter 13 montiert. Ueber einen nicht dargestellten Verteilkopf wird das Kondensat in den Entgaserdom 12 eingespritzt. Ueber eine Speisedampfleitung 16 gelangt Anzapfdampf aus der Dampfturbine 1 in den Entgaserdom 12, wodurch das Kondensat im Entgaserdom 12 erwärmt und entgast wird. Inerte und nicht kondensierbare Gase können so aus dem Kondensat ausgeschieden werden. Das erwärmte Kondensat wird im Speisewasserbehälter 13 als Speisewasser zwischengespeichert. Das Speisewasser wird durch eine Speisewasserpumpe 14 und eine Speisewasserleitung 15 dem Abhitzedampferzeuger 8 zugeführt. Wenn die Dampfturbine 1 schnell ausser Betrieb gesetzt werden soll, ist dazu üblicherweise eine Umgehungsdampfleitung 18 vorgesehen. Ein Ventil 7 in der Dampfleitung 6 wird dabei geschlossen und ein Ventil 19 in der Umgehungsdampfleitung 18 geöffnet. Der Dampf wird dadurch direkt dem Kondensator 5 zugeführt. Die Umgehungsdampfleitung 18 kann ebenfalls beim Anfahren der Dampfturbine 1 benutzt werden, um zu verhindern, dass Nassdampf in die Dampfturbine gelangt.

Von der Dampfleitung 6 oder wie dargestellt von der Umgehungsdampfleitung 18 zweigt nun eine Einspritzdampfleitung 23 ab. Ueber die Einspritzdampfleitung 23 wird Dampf in die Brennkammer 43 der Gasturbine oder direkt in die Turbine 41 eingespritzt. In der Einspritzdampfleitung 23 befindet sich ein Drosselventil 22 und eine Messblende 21. Ueber die Messblende 21 wird ein in der Speisewasserleitung 15, vor dem Abhitzedampferzeuger 8 angeordnetes Regelungsventil 20 gesteuert.

Bei normalem Betrieb der Kraftwerksanlage mit der Dampfturbine 1 ist das Ventil 7 geöffnet und das Ventil 19 sowie das Drosselventil 22 geschlossen. Die Temperatur sowie die Menge des Dampfes in der Dampfleitung 6 wird über das Regelventil 20 mittels des Dampfzustandes am Austritt aus dem Abhitzedampferzeuger 8 in der Dampfleitung 6 geregelt. Steigt die Temperatur des Dampfes in der Dampfleitung 6 über einen vorgegebenen Wert, wird das Regelventil 20 geöffnet. Durch die grössere Durchflussmenge von Speisewasser durch den Abhitzdampferzeuger 8 sinkt die Temperatur des Dampfes in der Dampfleitung 6. Sinkt die Temperatur des Dampfes unter einen bestimmten Wert, wird das Regelventil 20 wieder leicht geschlossen und so weiter.

Soll nun die Dampfturbine 1 ausser Betrieb gesetzt werden, beispielsweise zur Wartung, wird das Ventil 7 geschlossen und das Drosselventil 22 geöffnet. Die Regelung der in die Gasturbogruppe eingespritzten Dampfmenge erfolgt nun mittels der messblende 21 und des Regelventiles 20. Steigt die Dampfmenge in der Einspritzdampfleitung 23 über einen vorgegebenen Wert, wird das Regelventil 20 leicht geschlossen. Durch die kleinere Durchflussmenge von Speisewasser durch den Abhitzdampferzeuger 8 sinkt die Dampfmenge in der Einspritzdampfleitung 23. Sinkt die Dampfmenge unter einen bestimmten Wert, wird das Regelventil 20 wieder geöffnet und so weiter. Der in die Gasturbogruppe eingespritzte Dampf geht natürlich verloren und muss über die Wasserleitung 17 mittels demineralisiertem Wasser ersetzt werden.
Dieses Verfahren wird durch den Abhitzedampferzeuger 8 möglich, in dem das Wasser in einem Durchlauf (engl. once-through) durch den Abhitzedampferzeuger 8 geleitet wird. Dadurch dass das Regelventil 20 bei jedem Betriebszustand die Dampfmenge regeln kann, wird bei wenig benötigtem Dampf die nicht genutzte Wärmeenergie einfach mittels einer höheren Abgastemperatur am Austritt aus dem Abhitzedampferzeuger 8 abgeführt.

Selbstverständlich ist die Erfindung nicht auf das gezeigte und beschriebene Ausführungsbeispiel beschränkt. Die Umgehungsdampfleitung kann weggelassen werden, ohne die Erfindung zu beeinträchtigen. Das Drosselventil kann auch beim Betrieb der Dampfturbine geöffnet werden, um die Leistung der Gasturbogruppe zu erhöhen. Die Dampfturbine und die ihr zugehörigen Teile können durch einen beliebigen Dampfverbraucher ersetzt werden.

### Bezugszeichenliste

- 1: Dampfturbine
- 2: Generator
- 3: Welle
- 4: Abdampf leitung
- 5: Kondensator mit Hotwell
- 6: Dampfleitung
- 7: Ventil
- 8: Abhitzedampferzeuger
- 10: Pumpe
- 11: Kondensatleitung
- 12: Entgaserdom
- 13: Speisewasserbehälter
- 14: Speisewasserpumpe
- 15: Speisewasserleitung
- 16: Speisedampfleitung
- 17: Wasserleitung
- 18: Umgehungsdampfleitung
- 19: Ventil
- 20: Regelventil
- 21: Messblende
- 22: Drosselventil
- 23: Einspritzdampfleitung
- 40: Verdichter
- 41: Turbine
- 42: Welle
- 43: Brennkammer
- 44: Luftzuführung
- 45: Brennstoff
- 46: Generator
- 47: Abgasleitung
- 48: Kamin

## Patentansprüche

1. Verfahren zum Betrieb einer Kraftwerksanlage, im wesentlichen bestehend aus einer Gasturbogruppe (40, 41, 46), einem Abhitzedampferzeuger (8) und einem nachgeschalteten Dampfverbraucher, beispielsweise einer Dampfturbine (1) mit Generator (2), wobei das Abgas der Gasturbogruppe (40, 41, 46) Wärme an das über eine Speisewasserleitung (15) zugeführte und im Gegenstrom durch den Abhitzedampferzeuger (8) geleitete Wasser abgibt und wobei der erzeugte Dampf über mindestens eine Dampfleitung (6) dem Dampfverbraucher (1) zugeführt wird,
dadurch gekennzeichnet,
dass das durch die Speisewasserleitung (15) zugeführte Wasser in einem Durchgang durch den Abhitzedampferzeuger (8) geleitet wird,
dass die Abgase der Gasturbogruppe (40, 41, 46) zu jedem Betriebszeitpunkt durch den Abhitzedampferzeuger (8) geleitet werden und
dass wenn der Dampfverbraucher (1) abgeschaltet wird, der im Abhitzedampferzeuger (8) erzeugte Dampf über eine Einspritzdampfleitung (23) in die Gasturbogruppe (40, 41, 46) eingeleitet wird.

2. Verfahren nach Anspruch 1,
dadurch gekennzeichnet,
dass mittels einer Messblende (21) in der Einspritzdampfleitung (23) und eines Ventiles (20) in der Speisewasserleitung (15) die in die Gasturbogruppe (40, 41, 46) eingeleitete Dampfmenge geregelt wird.

3. Verfahren nach Anspruch 1,
dadurch gekennzeichnet,
dass zum Abschalten des Dampfverbrauchers (1) ein Ventil (7) in der Dampfleitung (6) geschlossen wird und ein Drosselventil (22) in der Einspritzdampfleitung (23) geöffnet wird.

4. Verfahren nach Anspruch 1,
dadurch gekennzeichnet,
dass der Dampf über die Einspritzdampfleitung (23) in eine Brennkammer (43) oder eine Turbine (41) der Gasturbogruppe (40, 41, 46) eingeleitet wird.

5. Vorrichtung zur Durchführung des Verfährens nach Anspruch 1,
dadurch gekennzeichnet,
dass die Gasturbogruppe (40, 41, 46) über eine Einspritzdampfleitung (23) mit der Dampfleitung (6) oder einer Umgehungsdampfleitung (18) verbunden ist und dass die Gasturbogruppe direkt über eine Abgasleitung (47) mit dem Abhitzedampferzeuger (8) verbunden ist.

6. Vorrichtung nach Anspruch 5,
dadurch gekennzeichnet,
dass in der Einspritzdampfleitung (23) ein Drosselventil (22) und eine Messblende (21) angeordnet sind.
